# EUROPEAN PATENT APPLICATION

(11) **EP 4 733 824 A2**
(43) Date of publication of application: **29.04.2026**
(21) Application number: 25225058.4
(22) Date of filing: 12.03.2024
(51) Int. Cl.: G02B 21/34

(54) **MICROSCOPE STAGE AND METHOD FOR EXAMINING A SAMPLE**

(62) Divisional of application: 24162818.9
(71) Applicant: Leica Microsystems CMS GmbH, 35578 Wetzlar (DE)
(72) Inventor: Christ, Stefan, 35578 Wetzlar (DE)
(74) Representative: Schaumburg und Partner Patentanwälte mbB

(57) **Abstract**

In a first aspect, a microscope stage (100, 500, 600) is provided comprising a receiving surface (102) configured to receive at least a first sample carrier (104, 200) with a plurality of sample areas (202, 204), an imaging area (206), and a surface moving device (118) configured to move the receiving surface (102) along at least two directions, wherein the surface moving device (118) has a range of movement along the at least two directions such that any one of the sample areas of the plurality of sample areas (202, 204) is alignable with the imaging area (206). The microscope stage further comprises at least one liquid handling head (106, 502, 602) configured to dispense fluids onto the sample carrier (104, 200), and a head moving device (108, 110, 112) configured to move the at least one liquid handling head (106, 502, 602) along at least two directions, wherein the head moving device (108, 110, 112) has a range of movement along the at least two directions such that the at least one liquid handling head (106, 502, 602) is alignable with any one of the sample areas (202, 204) of the plurality of sample areas (202, 204). In further aspects a corresponding microscope and method are provided.

## Description

### Technical field

The invention relates to a microscope stage with a liquid handling head, a corresponding microscope, and a method for examining a sample.

### Background

Experiments in the life sciences often involve the microscopic study of samples that have been manipulated or treated with various reagents in order to study and understand biological processes. These experiments typically involve manually contacting sample with the reagents. For example by pipetting liquids such as a reagent onto a sample. Especially for experiments with a high throughput, for example when using multi well plates, this is a time consuming task. Every necessary human interaction decreases the walk-away time of an experiment, and thus, the efficiency of the experiment. Many experiments also require multiple reagents to be added to the samples in quick succession, while the actual reaction to be observed may take multiple minutes, hours, or even days.

Manually pipetting samples is not only tedious and time consuming, it also increases the risk of contaminating the samples. It is therefore desirable to automate the pipetting process as much as possible.

### Summary

It is therefore an object to provide a microscope stage and a method for examining a sample that allow for automated pipetting.

The aforementioned object is achieved by the subject-matter of the independent claims. Advantageous embodiments are defined in the dependent claims and the following description.

In a first aspect, a microscope stage is provided. The microscope stage comprises a receiving surface configured to receive at least a first sample carrier with a plurality of sample areas, and an imaging area. The microscope stage further comprises a surface moving device configured to move the receiving surface along at least two directions, wherein the surface moving device has a range of movement along the at least two directions such that any one of the sample areas of the plurality of sample areas is alignable with the imaging area. The microscope stage also comprises at least one liquid handling head configured to dispense fluids onto the sample carrier, and a head moving device configured to move the at least one liquid handling head along at least two directions, wherein the head moving device has a range of movement along the at least two directions such that the at least one liquid handling head is alignable with any one of the sample areas of the plurality of sample areas.

The microscope stage enables dispensing fluids to each of the sample areas by means of the liquid handling head irrespective of the specific position of the receiving surface within its range of movement. In particular, fluids may be dispensed to each of the sample areas irrespective of which one of the sample areas is aligned with the imaging area. This enables flexible use of the microscope stage. For example, when dispensing fluid onto the sample carrier, the fluid may be dispensed in a specific quantity or volume. Preferably, the volume may be in a range from 1 µl to 100 ml, more preferably in a range from 10 µl to 10 ml.

Further, no human interaction is required and the dispensing of fluids onto the sample carrier is easily automated. Thereby, the device can easily be integrated into a workflow design, in particular by means of software such as an experiment designer. This possibility of automation and the reduction of required human interaction also reduces the risk of contamination due to human error. Overall, the microscope stage has a long walk-away time resulting in more efficient experiment designs.

Each of the sample areas of the sample carrier are preferably configured to receive a biological sample. An example of a biological sample is a cell culture or a tissue section. The sample carrier may be a microplate comprising a plurality of cavities, wherein the cavities are the sample areas. In this case, the sample areas may be termed sample volumes. The receiving surface may preferably have a tongue or a groove in order to receive a corresponding groove or tongue of the sample carrier. This enables a safe hold of the sample carrier that is arranged on the receiving surface, in particular, when the receiving surface is moving.

In a preferred embodiment, the receiving surface may be configured to additionally receive a second sample carrier. In particular, the second sample carrier may have a different layout of sample areas compared to the first sample carrier. Further, the sample areas of the second sample carrier may have a different geometry compared to the sample areas of the first sample carrier. This enables flexible use of the microscope stage.

Preferably, at least the sample areas of the sample carriers are transparent in order to enable imaging through the sample carrier.

Preferably, the imaging area is for imaging one of the sample areas. The imaging area may be aligned with an optical system of a microscope in order to image one of the sample areas when that sample area is aligned with or in the imaging area. The receiving surface may have at least one opening or cutout such that when any one of the sample areas is aligned with the imaging area, the sample area may be imaged through the opening.

When the receiving surface is moved by means of the surface moving device, the sample carrier arranged on the receiving surface is equally moved. The at least two directions of the surface moving device are preferably perpendicular to each other. In particular, the at least two directions are arranged in a plane of the receiving surface. For example, the at least two directions are x and y directions. In a particular embodiment, the surface moving device may comprise individual motors that move the receiving surface in one of the at least two directions.

In particular, any one of the sample areas is aligned with the imaging area, when the imaging area and the sample area are aligned along an axis perpendicular to the plane of the receiving surface.

Dispensing of fluids, in particular liquids, by the liquid handling head may include aspiration of fluids by the liquid handling head. The dispensing and/or aspiration of fluids may also be termed pipetting of the fluids. In particular, the fluids may be dispensed and/or aspirated in a controlled way and at specific locations on the sample carrier. The liquid handling head may preferably be (fluidly) connected to or comprise a liquid handling device, in particular, at least a pump and fluidic connections.

The at least two directions of the head moving device are preferably perpendicular to each other. In particular, the at least two directions are arranged parallel to the plane of the receiving surface. For example, the at least two directions are x and y directions. The x and y directions of the head moving device may be the same as the x and y directions of the surface moving device. In a particular embodiment, the head moving device may comprise individual motors that move the liquid handling head in one of the at least two directions.

In particular, any one of the sample areas is aligned with the liquid handling head, when the liquid handling head are aligned along an axis perpendicular to the plane of the receiving surface. When the liquid handling head is aligned with a particular one of the sample areas, fluids may be specifically dispensed onto that sample area.

In particular, the microscope stage enables aligning the liquid handling head with any one of the sample areas irrespective of the specific position of the surface moving device or the sample carrier. Thus, at any position of the surface moving device or the sample carrier, any one of the sample areas is accessible by the liquid handling head, either simultaneously or subsequently in time.

Preferably, the range of movement of the liquid handling head, in particular the head moving device, is at least as large, or larger, than the range of movement of the receiving surface, in particular the surface moving device. In particular, this enables moving any one of the sample areas to the imaging area and image a sample in the sample area, and simultaneously dispense fluids to any one of the other sample areas.

Preferably, the surface moving device is configured to move the receiving surface along a third direction. This enables a flexible positioning of the receiving surface. The third direction may be termed a z-direction. In particular, the third direction is perpendicular to the at least two directions of the surface moving device.

Preferably, the head moving device is configured to move the liquid handling head along a third direction. This enables flexible positioning of the liquid handling head. For example, this enables moving the liquid handling head towards the sample carrier. The third direction may be termed a z-direction. In particular, the third direction is perpendicular to the at least two directions of the head moving device.

Preferably, the liquid handling head comprises at least one seal configured to seal at least the sample area the liquid handling head is aligned with. This enables safely and robustly dispensing fluids only to the sample area the liquid handling head is aligned with. In particular, the seal may seal against the sample carrier. This may result in the generation of a cavity between the liquid handling head and the respective sample area. In a particular embodiment, the seal may only engage upon movement of the pipetting head in a z-direction towards the sample carrier.

Preferably, the seal is adaptable to different sample area geometries. This enables flexible use of the microscope stage. In particular, the seal may be actively adaptable. For example, the seal may be inflatable to fit to a particular geometry. In another example, the seal may be passively adaptable, for example, the seal may be a soft seal that may be pressed against the sample area to adapt its fit. Examples of different geometries of sample areas include round or square well plates.

Preferably, the seal is configured to enable pressurisation of the sample area. This enables flexible use of the microscope stage. For example, the pressurisation of the sample area may speed up staining reactions when dispensing staining reagents onto the sample area. In particular, the seal may be configured to enable pressurisation of a cavity of a microplate. Similarly, the liquid handling head may be configured to enable pressurisation of the sample area, in particular, by dispensing a fluid onto the sealed sample area. The sealed sample area may be pressurised to a pressure in a range between 1.5 to 5 bar.

Preferably, the liquid handling head comprises at least one nozzle assembly. This enables precisely dispensing fluids onto any one of the sample areas. In particular, the nozzle assembly is configured to dispense fluids onto the sample area the liquid handling head is aligned with. The nozzle assembly may comprise at least one nozzle for dispensing fluids onto the sample area. Preferably, the nozzle assembly is arranged on the liquid handling head to face the receiving surface or the sample carrier.

Preferably, the nozzle assembly comprises at least an outlet nozzle and an inlet nozzle. This enables flexible use of the microscope stage. In particular, the inlet nozzle and outlet nozzle enable dispensation or aspiration of fluids onto the sample area, respectively. For example, a staining reagent may be added to a sample in the sample area by means of the inlet nozzle, then incubated for a period of time, and subsequently the staining reagent may be removed to waste by means of the outlet nozzle. The inlet nozzle and the outlet nozzle may be fluidly connected to reservoirs and pumps in order to supply or remove the fluids. The flow through the outlet nozzle and the inlet nozzle may be independently controlled, for example by means of valves. In a preferred embodiment, the outlet nozzle has a greater length from the nozzle assembly towards the sample carrier than the inlet nozzle. This enables efficient removal of fluids, in particular liquids, from the sample area. In particular, this is the case, when the sample area is a cavity. In this case, the outlet nozzle may be positioned closer to a bottom of the cavity than the inlet nozzle.

Preferably, the liquid handling head comprises a plurality of the nozzle assemblies, wherein each nozzle assembly is arranged on the liquid handling head, and in particular configured, to dispense the fluids onto one of the sample areas of the plurality of sample areas when the liquid handling head is aligned with the sample areas. This enables high-throughput use of the microscope stage. Thus, the liquid handling head may be aligned with more than one sample area at any one time, in particular in case there are several nozzle assemblies. In this case, each individual nozzle assemblies may be aligned with one of the sample areas. However, it is not a requirement that each nozzle assembly is alignable with each one of the sample areas. The flow through each nozzle assembly may be controlled independently, for example by means of valves.

Preferably, the liquid handling head is replaceable, in particularly individually replaceable. Thus, the liquid handling head may be removed from the microscope stage and swapped for another liquid handling head. This enables flexible use of the microscope stage. For example, different liquid handling heads may be adapted to different sample carriers, in particular to sample carriers with different geometries.

Preferably, the liquid handling head comprises at least one fluid line for coupling the liquid handling head, in particular the nozzle assembly, to a fluid reservoir. This enables efficient supply of fluids to the liquid handling head, in particular the nozzle assembly. In a particular embodiment, the liquid handling head may further be coupled to a pump for pumping fluids between the fluid reservoir and the liquid handling head, in particular the sample area.

Preferably, the microscope stage may further comprise a waste area. The liquid handling head, in particular the nozzle assembly, is alignable with the waste area. When the liquid handling head is aligned with the waste area fluids may be flushed through the liquid handling head, in particular the nozzles. This enables washing the liquid handling head or the nozzles without contaminating the sample areas.

In another aspect a replaceable fluidic link for an analytical laboratory device is provided. The replaceable fluidic link comprises a first connector and a second connector, and at least one fluid line between the first connector and the second connector. The first connector and the second connector are reversibly connectable to respective fluidic ports, or fluidic manifolds.

In particular, the first and second connector are each configured to generate a fluid-tight seat in the respective fluidic port by engaging a releasable locking mechanism upon movement of the first or second connector towards the respective fluidic port in a direction of the flow through the connector. For example, the first connector and the second connector are reversibly connectable to the respective fluidic ports by pressing the first connector and the second connector against their respective fluidic port by means of a releasable click connector or a snap fitting, rather than screwing the first connector and the second connector against their respective fluidic port by means of a screw fitting.

Preferably, the first and second connectors may each comprise O-rings to enable a fluid-tight seal with the respective fluidic port.

Thus, the first and second connector may be quickly connected to their respective fluidic ports. Upon connecting the first and second connectors to their respective fluidic ports, a fluid may flow through the fluidic ports connected to the first and second connectors, through the first and second connectors, and through the fluid line between the first and second connectors.

The replaceable fluidic link enables rapidly changing a fluidic line in an analytical laboratory device. For example, in case fluidic lines are contaminated, or the analytical laboratory device is used for a different analytical protocol requiring different reagents flowing through the fluidic lines, the replaceable fluidic link enables easily changing the flow path that is in contact with the fluids or reagents.

Preferably, the replaceable fluidic link, in particular its flow path, is temperature resistant and/or chemically inert. For example, at least the flow path may be manufactured from a fluoropolymer, in particular a perfluoropolymer.

Preferably, the replaceable fluidic link comprises at least two fluid lines between the first connector and the second connector, wherein the first connector and the second connector each comprise respective plug connections for each of the fluid lines. This enables rapidly changing a plurality of fluidic lines in an analytical laboratory device. The first connector receives respective first ends of the at least two fluid lines and the second connector receives respective second ends of the at least two fluid lines.

The fluidic ports comprise respective port receivers for the plug connections. Thus, each fluidic line is connected to a dedicated port receiver via one of the plug connections. This enables efficiently replacing several independent fluid lines between two fluidic ports or manifolds in a single operation.

Preferably, the first connector and the second connector each comprise an orientation indicator corresponding to a respective orientation indicator on the fluidic ports. This enables securely connecting the first and second connectors to their respective fluidic ports, in particular, in the correct orientation, when the replaceable fluidic connection comprises a plurality of fluidic lines. The orientation indicators may be a visual mark to align the connector and the fluidic port when connecting both. Alternatively or in addition, the orientation indicators may be a tongue and a corresponding groove on the connector and the fluidic port, respectively.

Preferably, the at least one fluid line of the microscope stage comprises the replaceable fluidic link described above. In particular, the liquid handling head may comprise at least one fluidic port configured to receive the first or second connector of the replaceable fluidic link, for example, to connect the liquid handling head to a fluid reservoir. The replaceable fluidic link enables quickly replacing the fluidic lines between the liquid handling head and further liquid handling elements, such as the fluid reservoir or a pump.

In a further aspect, a microscope is provided comprising the microscope stage described above. In particular, the microscope may further comprise an optical system aligned with the imaging area of the microscope stage and the microscope may be configured to image a sample arranged in a sample area aligned with the imaging area. In a particular embodiment, the microscope may be an inverse microscope.

In another aspect, a method is provided for examining a sample by means of the microscope described above. The method comprises the step of dispensing at least one reagent onto one of the sample areas of the sample carrier by means of the liquid handling head. In particular, this step may comprise moving the liquid handling head by means of the head moving device to align with the one of the sample areas. The method further comprises moving the receiving surface by means of the surface moving device such that the one of the sample areas is aligned with the imaging area of the microscope stage. The method further comprises the step of imaging the one of the sample areas, in particular by means of the optical system of the microscope.

In particular, a sample is initially provided in the one of the sample areas. Thus, the sample may be contacted by the at least one reagent when the reagent is dispensed onto the one of the sample areas, for example. Further, when imaging the one of the sample areas, preferably the sample arranged in the one of the sample areas is imaged. The at least one reagent dispensed onto the one of the sample areas is a staining reagent, for example.

The method enables efficiently analysing a plurality of samples, each sample arranged in one of the sample areas of the sample carrier arranged on the receiving surface. In particular, the dispensing of reagents, including their subsequent removal, and the imaging of the samples may be automated, enabling the high-throughput examination of the plurality of samples.

Preferably, the steps of the method are carried out for at least another one of the sample areas, in particular for another sample arranged in the at least another one of the sample areas. This may comprise moving the liquid handling head to align with each of the at least another one of the sample areas subsequently and moving the receiving surface such that each sample area is subsequently aligned with the imaging area. In particular, subsequently may refer to subsequently in time, such that the sample areas are imaged one after the other.

Preferably, the steps of moving the receiving surface such that the one of the sample areas is aligned with the imaging area and/or of imaging the one of the sample areas is carried out at the same time as dispensing at least one reagent onto the another one of the sample areas. This enables efficiently examining the samples. In particular, reagents may be dispensed onto one of the sample areas other than the sample area being imaged. Thus, the imaging step and the dispensing step may be carried out simultaneously for different sample areas.

Preferably, movement of the receiving surface and movement of the liquid handling head are synchronised. This enables accurately dispensing reagents onto one of the sample areas even when the receiving surface and therefore the sample carrier are moving. In particular, the direction and speed of both movements may be the same.

Preferably, the at least one reagent is dispensed whilst the liquid handling head is moving. This enables efficiently examining the biological samples.

Preferably, during the step of imaging, the receiving surface is moved to move the one of the sample areas within the imaging area. In particular, this enables subsequently imaging, or scanning, parts of the sample in the one of the sample areas.

Preferably, during the step of dispensing the at least one reagent, a second reagent is dispensed by means of the liquid handling head onto the one of the sample areas of the sample carrier. In particular, the second reagent is delivered to the liquid handling head via the same fluid line as the at least one reagent. Specifically, the second reagent and the at least one reagent are delivered to the liquid handling head subsequently of each other. This may be referred to as fluid stacking.

Preferably, the microscope is configured to carry out the method described above.

The microscope, the replaceable fluidic link and the method have the same advantages as the microscope stage. Further, the microscope, the replaceable fluidic link and the method may be supplemented with the features of the microscope stage described in this document, in particular, the features of the dependent claims of the microscope stage.

### Short Description of the Figures

Hereinafter, specific embodiments are described referring to the drawings, wherein:
- Figure 1: is a schematic perspective view of a microscope stage,
- Figure 2: is a schematic top view of the microscope stage,
- Figure 3: is a schematic side view of the microscope stage,
- Figure 4: is a schematic side view of a liquid handling head of the microscope stage in two positions,
- Figure 5: is a schematic top view of a microscope stage according to a further embodiment,
- Figure 6: is a schematic top view of a microscope stage according to a further embodiment,
- Figure 7: is a schematic side view of the microscope stage according to Fig. 6,
- Figure 8: is a schematic side view of a liquid handling head of the microscope stage according to Fig. 6 in two positions,
- Figure 9: is a schematic view of a connector and a fluid line of a replaceable fluidic link,
- Figure 10: is a schematic view of a manifold with a fluidic port,
- Figure 11: is a schematic view of an alternative connector for a replaceable fluidic link,
- Figure 12: is a schematic view of an alternative manifold with fluidic ports,
- Figure 13: is a schematic view of the microscope stage according to Fig. 6 with a replaceable fluidic link,
- Figure 14: is a schematic view of the microscope stage according to Fig. 2 with a replaceable fluidic link,
- Figure 15: is a schematic view of the microscope stage according to Fig. 6 with a replaceable fluidic link, and
- Figure 16: is a schematic view of a flow chart of a method for examining a sample.

### Detailed Description

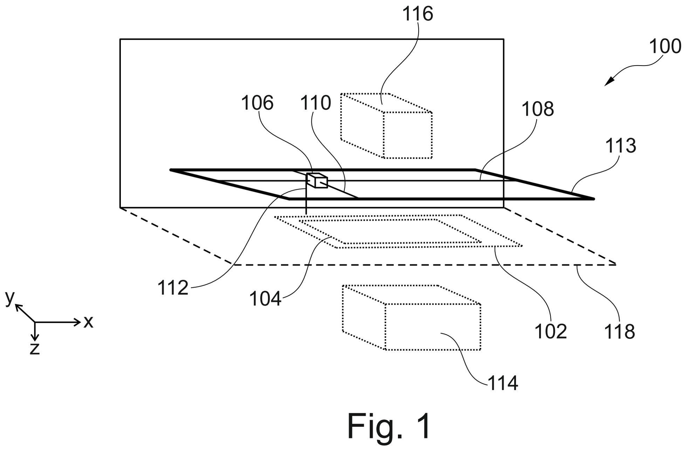

Figure 1 is a schematic perspective view of a microscope stage 100. The microscope stage 100 comprises a receiving surface 102. On the receiving surface a sample carrier 104 is arranged. The sample carrier 104 may have a plurality of sample areas for receiving samples.

The microscope stage 100 further comprises a liquid handling head 106, which is configured to dispense fluids onto the sample carrier 104. By means of the liquid handling head 106 fluids, in particular liquids, may be dispensed onto the sample carrier 104, in particular the sample areas. Dispensing fluids may include aspiration of fluids by the liquid handling head 106. Thus, fluids may be added to and/or removed from any one of the sample areas of the sample carrier 104. In particular, the fluids may be dispensed in a specific quantity or volume at a specific location on the sample carrier 104. The dispensing and/or aspiration of fluids may also be termed pipetting of the fluids.

In order to reach several locations or sample areas on the sample carrier 104 with the liquid handling head 106 the microscope stage 100 may comprise a head moving device. The head moving device may comprise a spindle drives 108, 110, 112 that enable moving the liquid handling head 106 along particular directions. Specifically, the spindle drive 108 may move the liquid handling head 106 in a x-direction, the spindle drive 110 may move the liquid handling head 106 in a y-direction, and the spindle drive 112 may move the liquid handling head 106 in a z-direction. The spindle drives 108, 110 and their respective x- and y-directions enable moving the liquid handling head 106 parallel to a plane of the receiving surface 102 or the sample carrier 104. The spindle drive 112 and its respective z-direction enable moving the liquid handling head 106 towards or away from the receiving surface 102 or the sample carrier 104. Thus, the head moving device enables moving the liquid handling head 106 relative to the sample carrier 104 arranged on the receiving surface 102, and aligning the liquid handling head 106 with specific positions, such as the sample areas, on the sample carrier 104. The head moving device, in particular the spindle drives 108, 110, may be suspended on a frame 113 of the microscope stage. In particular, the frame 113 schematically indicates the range of movement of the head moving device along the x- and y-directions.

In an alternative embodiment, the head moving device may only comprise the spindle drives 108, 110 and the liquid handling head 106 may only be movable in the x- and y-directions.

The microscope stage 100 may be comprised by a microscope, for example an inverse microscope. Elements of such a microscope are included exemplarily in Fig. 1, specifically, an optical system 114 and an illumination system 116. The optical system 114 may be configured to image the sample areas, in particular samples in the sample areas, of the sample carrier 104, when the sample carrier 104 is arranged on the receiving surface 102. Similarly, the illumination system 116 may be configured to illuminate the sample area that is being imaged by means of the optical system 114.

The microscope stage 100 further comprises a surface moving device 118 configured to move the receiving surface 102. By moving the receiving surface 102 the sample carrier 104 arranged on the receiving surface 102 is equally moved.

The surface moving device 118 enables aligning the sample carrier 104, in particular specific sample areas of the sample carrier 104, with the optical system 114. Specifically, the surface moving device 118 may comprise drives that move the receiving surface 102 in the x- and y-directions.

In an alternative embodiment, the surface moving device 118 may further comprise a drive configured to move the receiving surface 102 in the z-direction.

The surface moving device 118 has a range of movement along the x- and y-directions that allows aligning any one of the sample areas of the sample carrier 104 with the optical system 114. Further, the head moving device, particularly the spindle drives 108, 110, has a range of movement along the x- and y- directions that allows aligning the liquid handling head 106 with any one of the sample areas irrespective of the specific position of the sample carrier 104 in the x- and y-directions. Thus, the liquid handling head 106 may be moved to align with any one of the sample areas of the sample carrier 104 at any one time. Thus, the microscope stage 100 enables dispensing fluids by means of the liquid handling head 106 to any one of the sample areas of the sample carrier 104.

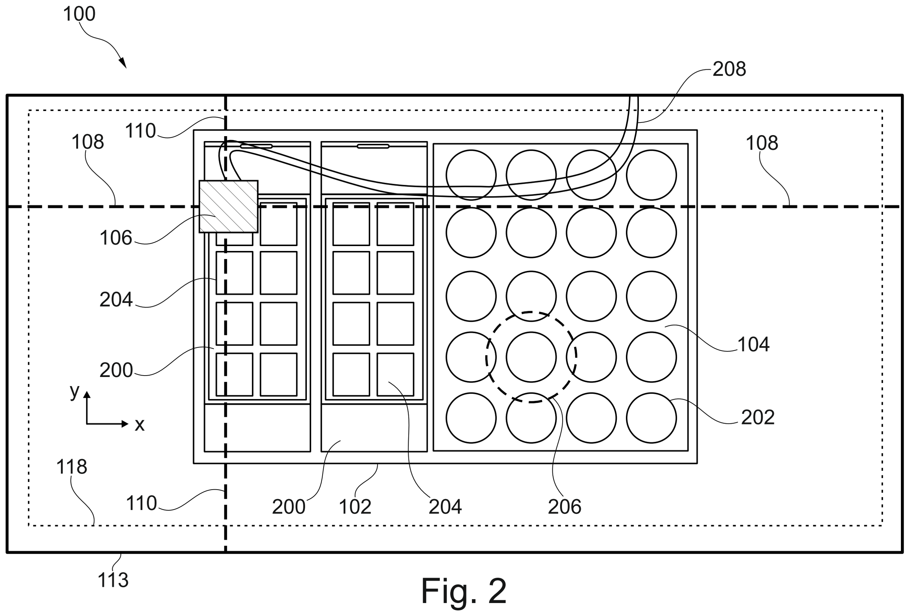

Figure 2 is a schematic top view of the microscope stage 100. The sample carrier 104 as well as further sample carriers 200 are arranged on the receiving surface 102. The sample carrier 104 comprises twenty sample areas 202. For example, the sample carrier 104 may be a microwell plate and the sample areas 202 are round bottom wells. In contrast, the sample carrier 200 may be a microwell plate with eight sample areas 204. For example, the sample carrier 200 may be a microwell plate and the corresponding sample areas 204 are square bottom wells. Thus, the receiving surface 102 may receive several sample carriers 104, 200 with different configurations.

By moving the receiving surface 102, any one of the sample areas 202, 204 may be aligned with an imaging area 206 of the microscope stage 100. The particular sample area 202, 204 aligned with the imaging area 206 may be imaged, for example by means of the optical system 114. Specifically, a focus plane of the optical system 114 may be arranged such that a sample in the sample area 202, 204 aligned with the imaging area 206 may be imaged by the optical system 114. To that end, a corresponding imaging plane of the optical system 114 may be arranged on a detector surface in order to image the sample arranged in the focus plane.

The receiving surface 102 may have an opening such that the one sample area 202, 204 that is aligned with the imaging area 206 may be imaged by the optical system 114.

The liquid handling head 106 may be connected via fluid lines 208 to a liquid handling device, for example. In particular, the liquid handling head 106 may be connected to a liquid reservoir, a pump and/or a manifold. Via the fluid lines 208, the liquid handling head 106 may be supplied with fluids to be dispensed by the liquid handling head 106.

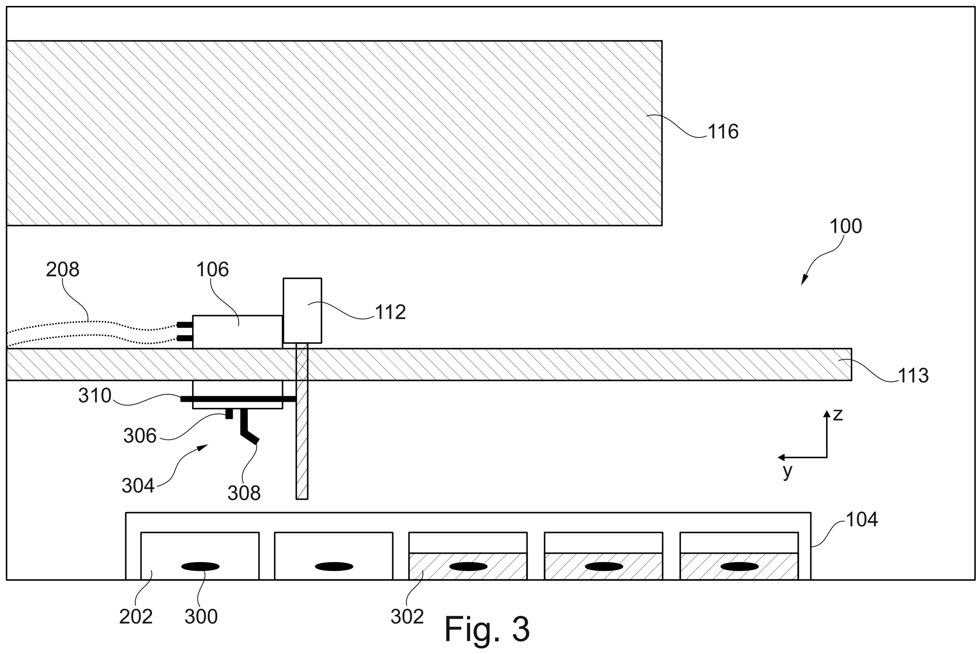

Figure 3 is a schematic side view of the microscope stage 100. The liquid handling head 106 is shown in a position distant of the sample carrier 104. By means of the spindle drive 112, the liquid handling head 106 may be moved towards the sample carrier 104 to dispense fluids specifically onto one of the sample areas 202.

In the view according to Fig. 3, a sample 300, such as a biological cell, is arranged in each of the sample areas 202. Some of the sample areas 202 are filled with a fluid 302 dispensed by the liquid handling head 106.

The liquid handling head 106 may comprise a nozzle assembly 304 arranged towards the sample carrier 104. As an example, the nozzle assembly may comprise an inlet nozzle 306 and an outlet nozzle 308. In particular, the fluid 302 may be dispensed by the liquid handling head 106 onto the sample area 202 through the inlet nozzle 306. Similarly, the fluid 302 may be aspirated from the sample area 202 through the outlet nozzle 308.

The liquid handling head 106 may further comprise a seal 310. The seal enables sealing the liquid handling head 106 against the sample carrier 104, in particular, when the liquid handling head 106 is in a position towards the sample carrier 104.

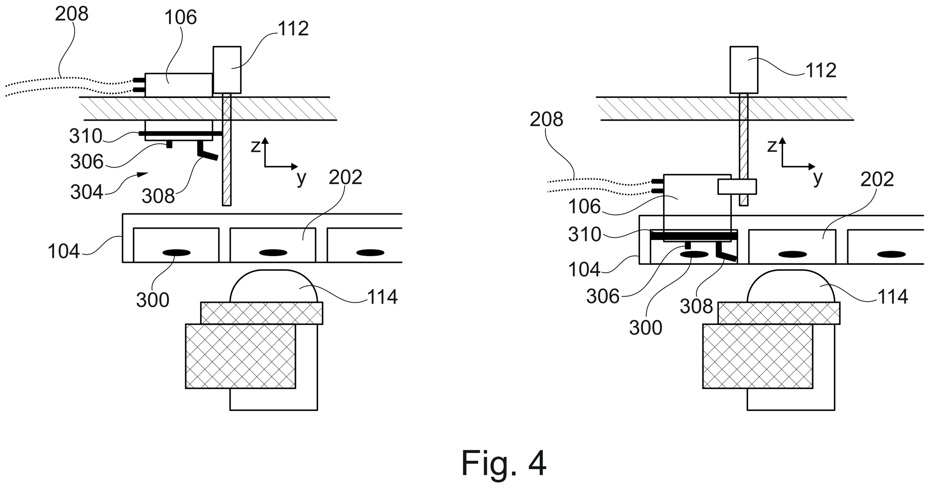

Figure 4 is a schematic side view of the liquid handling head 106 in a position distant of the sample carrier 104 (left display of Fig. 4) and in a position towards the sample carrier 104 (right display of Fig. 4).

In the position distant of the sample carrier 104, the liquid handling head 106 may be moved in the x- and/or y-direction and be aligned with a particular sample area 202. The liquid handling head 106 may then be moved in the z-direction into the position towards the sample carrier 104. In the position towards the sample carrier 104, the seal 310 is engaged with the sample carrier 104 in order to seal the sample area 202. In particular in the position of the liquid handling head 106 towards the sample carrier 104 may fluids be dispensed or aspirated.

The seal 310 and the sealing of a sample area 202 further enable pressurisation of that sample area 202, for example by introducing fluid into the sealed sample area 202 via the nozzle assembly 304 of the liquid handling head 106. The pressurisation may increase the speed of reactions between the fluids dispensed onto the sample area 202 and the sample 300 and therefore improve the efficiency of any methods carried out with the microscope stage 100.

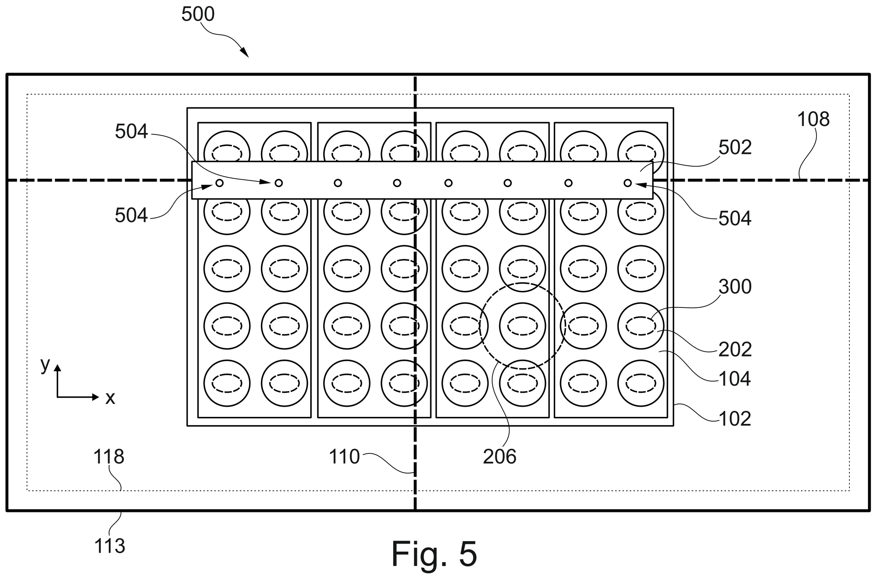

Figures 5 to 8 are schematic views of a alternative embodiments of a microscope stage.

Figure 5 is a schematic top view of a microscope stage 500 with an elongated liquid handling head 502. The liquid handling head 502 comprises eight nozzle assemblies 504. Each nozzle assembly 504 may be aligned with a different one of the sample areas 202 at any one time. By providing a plurality of nozzle assemblies 504, the liquid handling head 502 may dispense or aspirate fluids to more than one of the sample areas 202 at any one time. Each of the nozzle assemblies 504 may be connected to a liquid reservoir or a pump via fluid lines 208, for example.

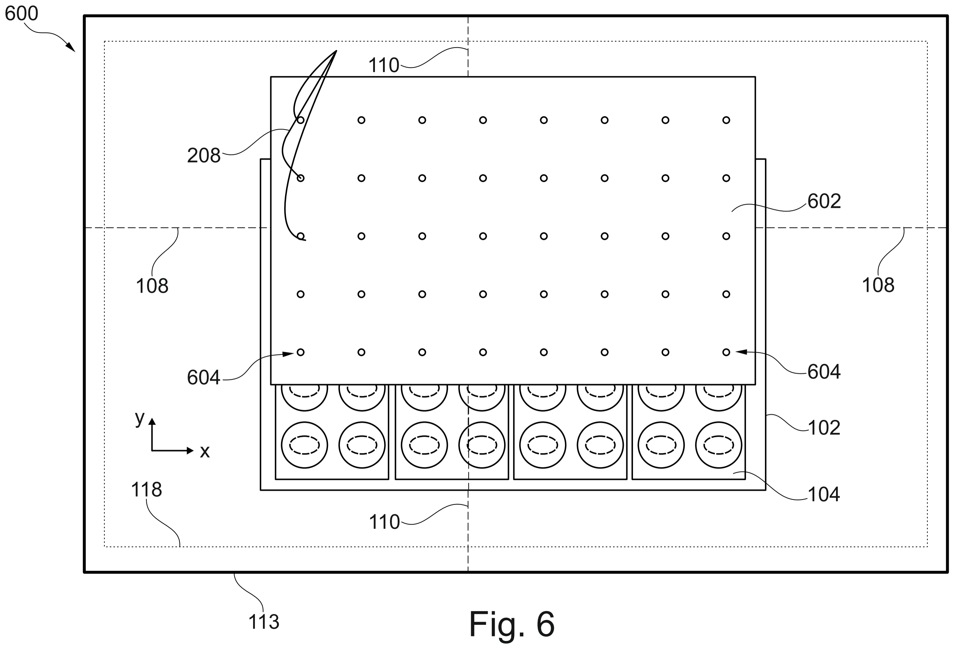

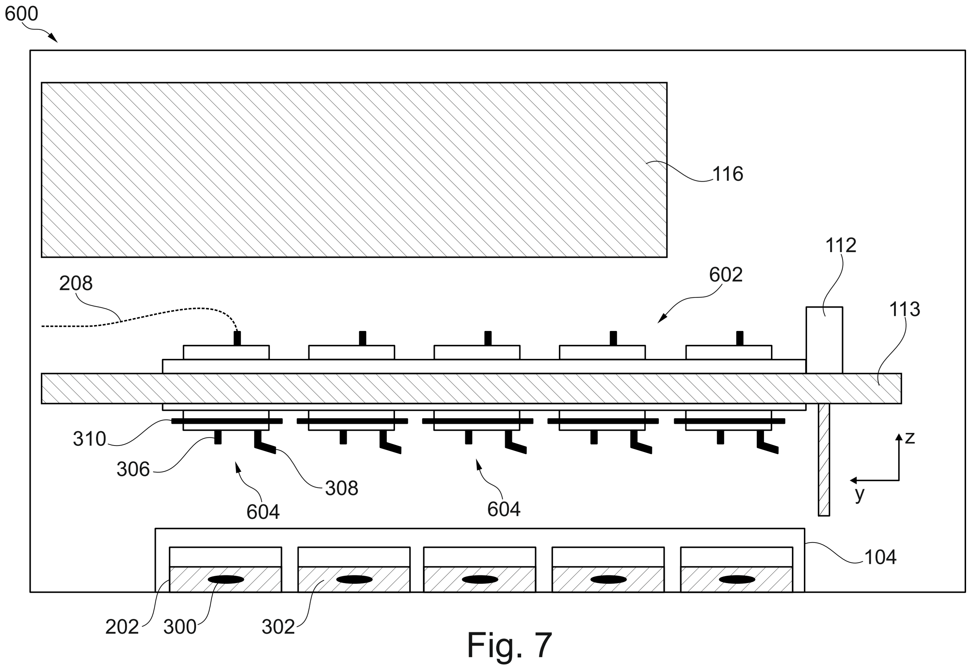

Figure 6 is a schematic top view of a microscope stage 600 with a liquid handling head 602. Figure 7 is a schematic side view of the microscope stage 600 with the liquid handling head 602. The liquid handling head 602 comprises forty nozzle assemblies 604. Each nozzle assembly 604 may be aligned with a different one of the sample areas 202 at any one time. By providing a plurality of nozzle assemblies 604, the liquid handling head 602 may dispense or aspirate fluids to more than one of the sample areas 202 at any one time. Each of the nozzle assemblies 604 may be connected to a liquid reservoir or a pump via fluid lines 208, for example.

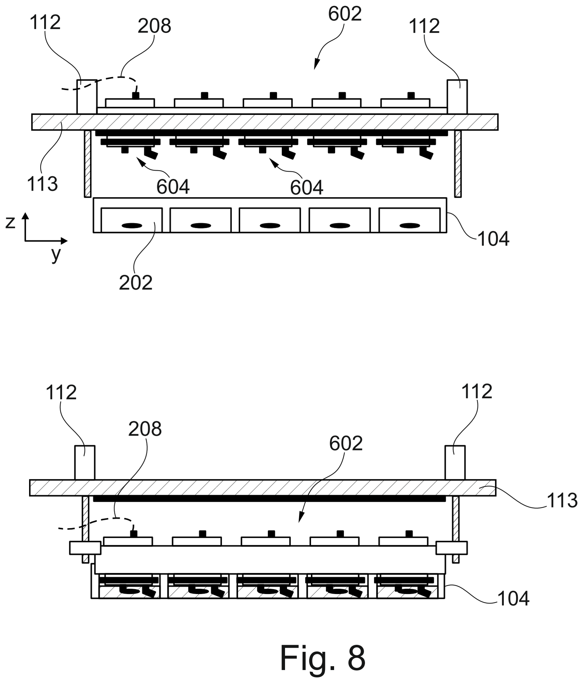

Figure 8 is a schematic side view of the liquid handling head 602 in a position distant of the sample carrier 104 (top display of Fig. 8) and in a position towards the sample carrier 104 (bottom display of Fig. 8).

The liquid handling head 602 may be moved in the z-direction into the position towards the sample carrier 104, in particular by two spindle drives 112. In the position towards the sample carrier 104 the plurality of nozzle assemblies 604 are each aligned with a particular one of the sample areas 202. In particular in the position of the liquid handling head 602 towards the sample carrier 104 may fluids be dispensed or aspirated.

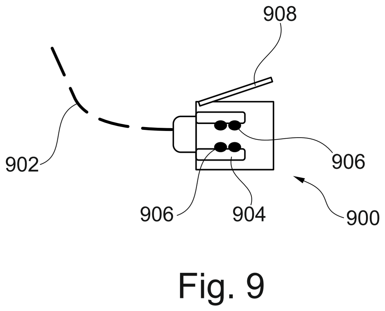

Figures 9 to 12 are schematic views of a replaceable fluidic link. Figure 9 is a schematic view of a connector 900 and a fluid line 902 of the replaceable fluidic link. The connector 900 comprises a plug connection 904 for generating a fluid-tight connection with a corresponding fluidic port. The plug connection 904 may comprise O-rings 906 to generate a fluid-tight seal.

The connector 900 may further comprise a releasable locking mechanism 908 configured to engage a corresponding mechanism on the fluidic port.

The replaceable fluidic link comprises two connectors 900 with connected via the fluid line 902.

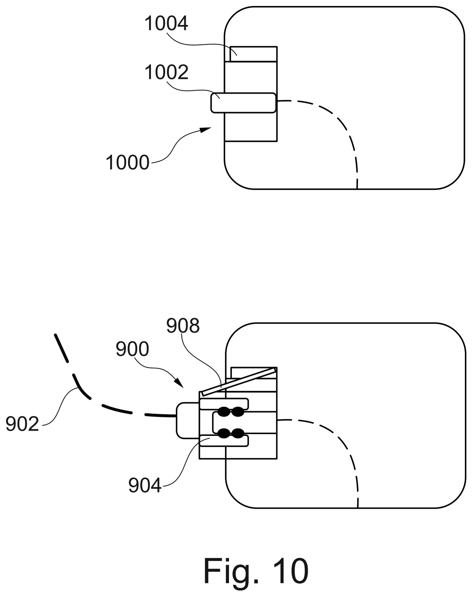

Figure 10 is a schematic view of a manifold 1000 with a fluidic port 1002 configured to receive the connector 900 (top display of Fig. 10). The fluidic port 1002 is configured to form a fluid-tight seal with the plug connection 904 of the connector 900. In particular, the fluidic port 1002 engages the O-rings 906 of the connector 900 in order to generate a fluid-tight seal.

The manifold 1000 further comprises a releasable locking mechanism 1004 configured to engage the locking mechanism 908 of the connector 900. In the bottom display of Fig. 10, the connector 900 is engaged with the fluidic port 1002. In particular, the connector 900 has a fluid-tight seat in the fluidic port 1002 by engaging the releasable locking mechanism 908 with the releasable locking mechanism 1004 upon movement of the connector 900 towards the fluidic port 1002 in a direction of the flow through the connector 900.

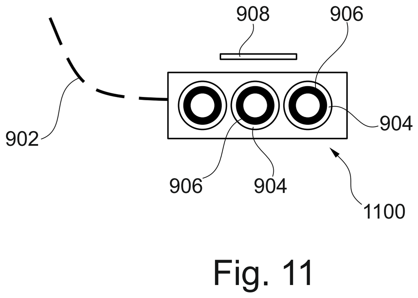

Figure 11 is a schematic view of a connector 1100 for a replaceable fluidic link with three fluid lines 902. The connector 1100 comprises one plug connection 904 for each fluid line 902. Thus, by means of the connector 1100 several fluid lines 902 may be connected at the same time, or in the same operation.

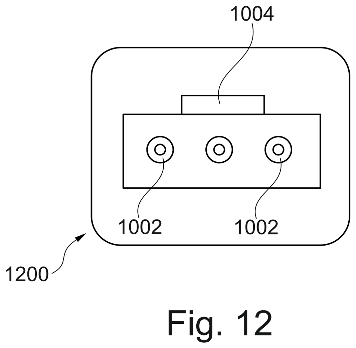

Figure 12 is a schematic view of a manifold 1200 for receiving the connector 1100. The manifold 1200 comprises three fluidic ports 1002 configured to each receive one of the plug connections 904 of the connector 1100. The releasable locking mechanism 908, 1004 may additionally function as an orientation indicator, such that the connector 1100 may only be connected with the manifold 1200 in one orientation. Thus, releasable locking mechanisms 908, 1004 ensure that each of the plug connections 904 may only be connected to one of the fluidic ports 1002 of the manifold 1200.

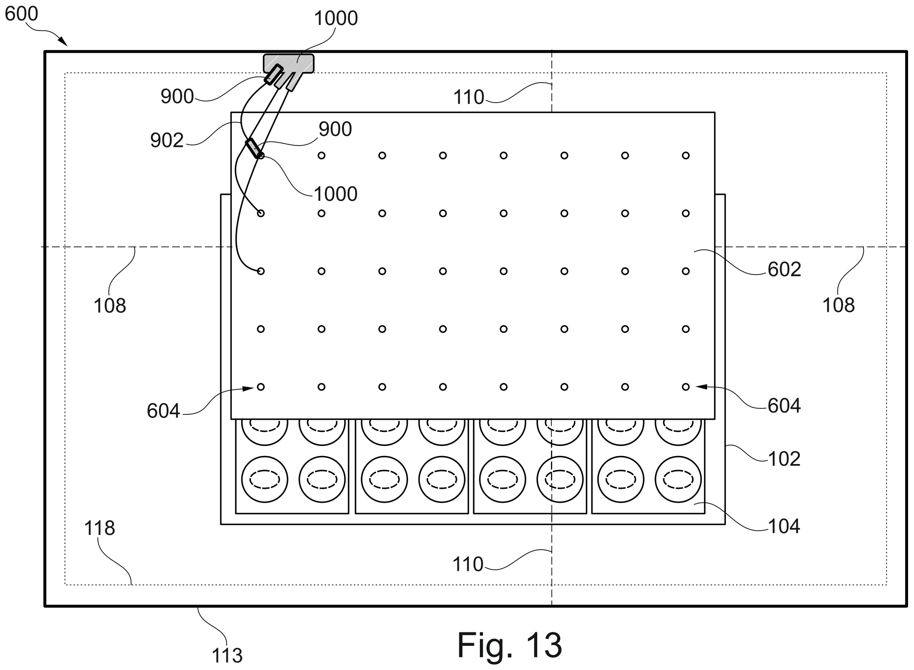

Figures 13 to 15 show the microscope stages 100, 600 comprising a replaceable fluidic link. Figure 13 is a schematic view of the microscope stage 600 with a replaceable fluidic link comprising two connectors 900 that are arranged at either end of the fluid line 902. One of the connectors 900 is connected to the manifold 1000 on the liquid handling head 602. The other one of the connectors 900 is connected to the manifold 1000 and may connect to a liquid reservoir, for example.

The replaceable fluidic link comprising the two connectors 900 and the fluid line 902 is easily replaced, for example in case the fluid line 902 is contaminated.

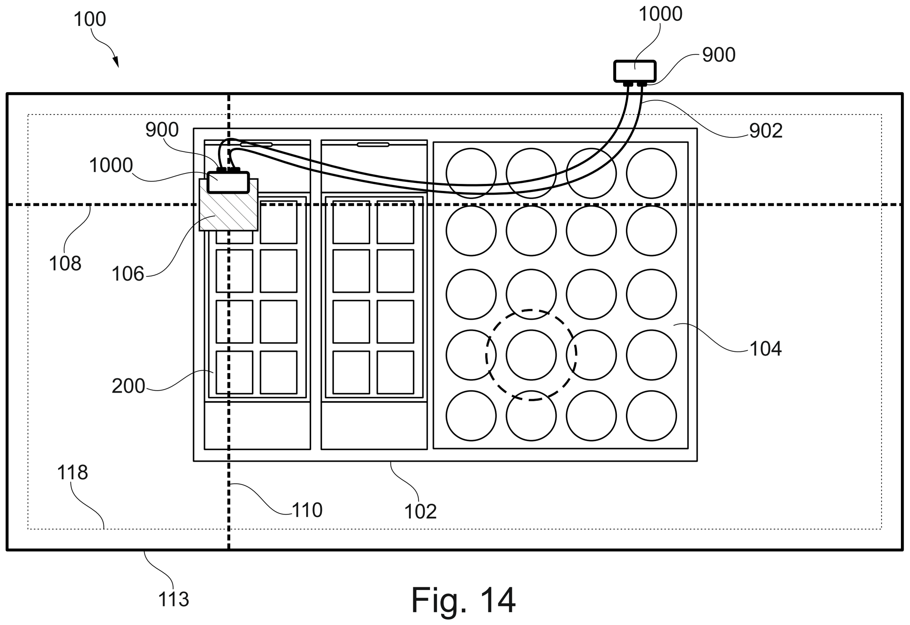

Figure 14 is a schematic view of the microscope stage 100 with a replaceable fluidic link comprising four connectors 900 and two fluid lines 902. Each fluid line 902 is connected to two of the connectors 900. One of the connectors 900 is connected to the manifold 1000 on the liquid handling head 106. The other one of the connectors 900 is connected to the manifold 1000 and may connect to a liquid reservoir, for example.

The replaceable fluidic link comprising the two connectors 900 and the fluid line 902 is easily replaced, for example in case the fluid line 902 is contaminated.

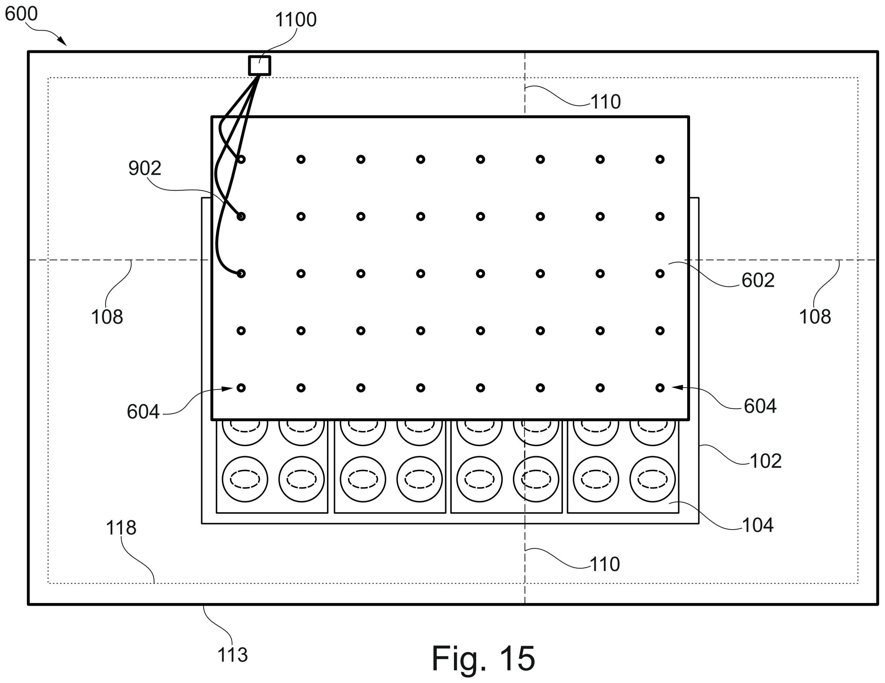

Figure 15 is a schematic view of the microscope stage 600 with a replaceable fluidic link comprising the connector 1100 and three fluid lines 902. The fluid lines 902 are each connected at one end to the liquid handling head 602, particularly each of the fluid lines 902 supplies a fluid to one of the nozzle assemblies 604. At another end of each of the fluid lines 902 they are connected to the connector 1100. The connector 1100 comprises three plug connections 904, one for each fluid line 902. The connector 1100 may be connected to the manifold 1200, for example.

This enables quickly replacing the liquid handling head 602 together with the replaceable fluidic link comprising the connector 1100 and three fluid lines 902.

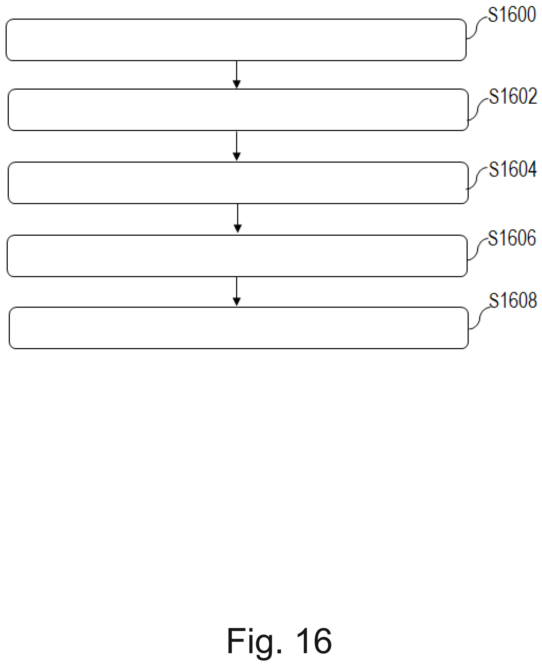

Figure 16 is a flow chart of a method for examining a sample. The method begins with step S1600. In step S1602 at least one reagent is dispensed onto the sample carrier 104, 200, particularly onto one of the sample areas 202, 204, by means of the liquid handling head 106, 502, 602. To that end, the liquid handling head 106, 502, 602 may be moved across its range of movement by means of the head moving device 108, 110, 112.

Subsequently, in step S1604 the receiving surface 102 may be moved by means of the surface moving device 118 in order to align the one of the sample areas 202, 204 of step S1602 with the imaging area 206.

Subsequently, in step S1606 the one of the sample areas 202, 204 in the imaging area 206, particularly the sample in the sample area 202, 204, may be imaged. The imaging may be carried out by means of the optical system 114, for example.

The method ends in step S1608.

Preferably, the step S1602 may be carried out for a further sample area 202, 204, in particular at the same time as the step S1604 and/or S1606 is carried out for the one of the sample areas 202, 204. Thus, the microscope stage 100, 500, 600 enables carrying out method steps in parallel for at least two of the sample areas 202, 204.

Further, in step S1602 the liquid handling head 106, 502, 602 may dispense several reagents onto the sample carrier 104, 200 or the sample area 202, 204. In addition, reagents may be aspirated by means of the liquid handling head 106, 502, 602 and therefore be removed from the sample area 202, 204.

The reagent may be a staining reagent and may specifically stain at least one structure of the sample in the sample area 202, 204. An example is the haematoxylin-eosin stain, during which the sample is contacted with an aqueous haematoxylin solution and an aqueous Eosin Y solution. This specifically stains cell nuclei blue and cytoplasm and extracellular matrix pink, which may be detected in the subsequent imaging step.

In particular example of the method, the liquid handling head 106, 502, 602 and the receiving surface 102 may be moved in sync by means of the head moving device 108, 110, 112 and the surface moving device 118, respectively. In particular, the liquid handling head 106, 502, 602 may dispense the reagent whilst it is moving. Since the receiving surface 102 and therefore the sample carrier 104, 200 is moving equally, the reagent is nevertheless dispensed onto the one of the sample areas 202, 204.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100, 500, 600: Microscope stage
- 102: Receiving surface
- 104, 200: Sample carrier
- 106, 502, 602: Liquid handling head
- 108, 110, 112: Head moving device, spindle drive
- 113: Frame
- 114: Optical system
- 116: Illumination system
- 118: Surface moving device
- 202, 204: Sample area
- 206: Imaging area
- 208, 902: Fluid line
- 300: Sample
- 302: Fluid
- 304, 504, 604: Nozzle assembly
- 306: Inlet nozzle
- 308: Outlet nozzle
- 310: Seal
- 900, 1100: Connector
- 904: Plug connection
- 906: O-ring
- 908, 1004: Releasable locking mechanism
- 1000, 1200: Manifold
- 1002: Fluidic port

## Claims

1. A replaceable fluidic link for an analytical laboratory device comprising:
a first connector (900, 1100) and a second connector (900, 1100), and
at least two fluid lines (208, 902) between the first connector (900, 1100) and the second connector (900, 1100),
wherein the first connector (900, 1100) and the second connector (900, 1100) are reversibly connectable to respective fluidic ports (1002),
wherein the first connector (900, 1100) and the second connector (900, 1100) each comprise respective plug connections (904) for each of the fluid lines (208, 902).

2. The replaceable fluidic link according to 1, wherein the first connector (900, 1100) and the second connector (900, 1100) each comprise an orientation indicator corresponding to a respective orientation indicator on the fluidic ports (208, 902).

3. A microscope stage (100, 500, 600) comprising:
a receiving surface (102) configured to receive at least a first sample carrier (104 200) with a plurality of sample areas (202, 204),
an imaging area (206),
a surface moving device (118) configured to move the receiving surface (102) along at least two directions, wherein the surface moving device (118) has a range of movement along the at least two directions such that each one of the sample areas (202, 204) of the plurality of sample areas (202, 204) is alignable with the imaging area (206),
at least one liquid handling head (106, 502, 602) configured to dispense fluids onto the sample carrier (104, 200), and
a head moving device (108, 110, 112) configured to move the at least one liquid handling head (106, 502, 602) along at least two directions, wherein the head moving device (108, 110, 112) has a range of movement along the at least two directions such that the at least one liquid handling head (106, 502, 602) is alignable with each one of the sample areas (202, 204) of the plurality of sample areas (202, 204),
wherein the liquid handling head (106, 502, 602) comprises at least two fluid lines (208, 902) for coupling the liquid handling head (106, 502, 602) to a fluid reservoir,
wherein the at least two fluid lines (208, 902) comprise the replaceable fluidic link according to one of the preceding claims 1 to 2.

4. A microscope comprising the microscope stage according to claim 3.

5. A method for examining a sample by means of the microscope according to claim 4 comprising the steps:
dispensing at least one reagent onto one of the sample areas of the sample carrier (104, 200) by means of the liquid handling head (106, 502, 602),
moving the receiving surface (102) by means of the surface moving device (118) such that the one of the sample areas (202, 204) is aligned with the imaging area (206) of the microscope stage, and
imaging the one of the sample areas (202, 204).

6. The method according to claim 5, wherein the steps of the method are carried out for at least another one of the sample areas (202, 204).

7. The method according to one of the preceding claims 6, wherein the steps of moving the receiving surface (102) such that the one of the sample areas (202, 204) is aligned with the imaging area (206) and/or of imaging the one of the sample areas (202, 204) is carried out at the same time as dispensing at least one reagent onto the another one of the sample areas (202, 204).

8. The method according to one of the preceding claims 5 to 7, wherein movement of the receiving surface (102) and movement of the liquid handling head (106, 502, 602) are synchronised.

9. The method according to one of the preceding claims 5 to 8, wherein the at least one reagent is dispensed whilst the liquid handling head (106, 502, 602) is moving.

10. The method according to one of the preceding claims 5 to 9, wherein during the step of imaging, the receiving surface (102) is moved to move the one of the sample areas (202, 204) within the imaging area (206).
